# EUROPÄISCHE PATENTSCHRIFT

(11) **EP 0 650 419 B1**
(45) Veröffentlichungstag und Bekanntmachung des Hinweises auf die Patenterteilung: **29.01.1997**
(21) Anmeldenummer: 93917608.7
(22) Anmeldetag: 21.07.1993
(51) Int. Cl.: F04B 1/04, F03C 1/053

(54) **HYDRAULISCHE MASCHINE**
HYDRAULIC DEVICE
SYSTEME HYRAULIQUE

(30) Priorität: 21.07.1992 DE 4224075
(43) Veröffentlichungstag der Anmeldung: 03.05.1995
(73) Patentinhaber: Vorsteher, Bettina, CH-9008 St. Gallen (CH); VORSTEHER, Tanja, CH-9008 St. Gallen (CH)
(72) Erfinder: VORSTEHER, Tanja, CH-9008 St. Gallen (CH)
(74) Vertreter: Alber, Norbert
(86) Internationale Anmeldenummer: EP9301933
(87) Internationale Veröffentlichungsnummer: WO9402334

(56) Entgegenhaltungen:
- EP-A- 0 009 466
- EP-A- 0 094 664
- DE-A- 2 233 053
- DE-A- 2 331 463
- DE-A- 3 236 076
- DE-A- 3 303 448
- DE-C- 3 501 608
- US-A- 1 714 706
- US-A- 4 195 553
- US-A- 4 754 603

## Beschreibung

Die Erfindung betrifft eine Hydraulikmaschine, wie sie insbesondere in der EP-A 630 335, veröffentlicht am 28. Dezember 1994. "Hydraulisches Antriebs- und Bremssystem" beschrieben ist.

Dabei sind in einem Zylindergrundkörper, der von einem abdichtenden Gehäuse umgeben ist, sternförmig Zylinder-bohrungen eingebracht, die sich in einem freien Zentralraum treffen.

In den Zylinderräumen laufen radial oder schräg radial verschiebliche Kolben, die über Pleuelstangen auf einer Pleuelachse gelagert sind, die sich exzentrisch zum Zylindergrundkörper durch dessen Zentralraum hindurch erstreckt.

Bei einer solchen Hydraulikmaschine zeigt bereits US-A-4 195 553 eine Möglichkeit, die Exzentrizität und damit das Schluckvolumen einer solchen Hydraulikmaschine zu verstellen, indem die Pleuelachse, auf der sich die Kolben über ihre Pleuelstangen abstützen, in ihrer Exzentrizität gegenüber einem ortsfesten, innerhalb der Pleuelachse und quer zu dessen Drehmitte angeordnetem Kolben verlagerbar ist.

Weiterhin zeigt DE-A-23 31 463 eine gattungsgemäße Hydraulikmaschine, bei der die Laufbuchsen, in denen die Kolben verschiebbar sind, einzeln gegenüber dem Grundkörper um eine außerhalb der Laufbuchsen liegende Schwenkachse verschwenkbar sind.

Als nächstreichender Stand der Technik ist DE-A-32 36 076 einzustufen, aus der die im Oberbegriff der Ansprüche 1 sowie 8 und 9 aufgeführten Merkmale bekannt sind, gemäß welcher Kolben und Kolbenstange einstückig ausgebildet sind und sich die Kolbenstange mit ihrem innenliegenden Ende auf den Umfangsflächen eines Vielecks abstützt, welches koaxial auf dem exzentrischen Außenumfang der Pleuelachse gelagert ist. Die rückseitigen Stirnflächen der Kolbenstangen können dadurch eine Gleitbewegung entlang der jeweiligen Außenfläche des Polygons vollziehen, die zum Ausgleich der exzentrisch kreisenden Bewegung des Polygons notwendig ist.

Dieses Funktionsprinzip wird geringfügig danach abgewandelt, ob es sich bei der Hydraulikmaschine um eine vorzugsweise als Pumpe eingesetzte Maschine handelt - bei welcher das Gehäuse stillstehen kann und der Zylindergrundkörper mit den Kolben rotieren wird - oder eine als Motor eingesetzte Hydraulikmaschine, bei der oft aufgrund der besseren konstruktiven Einbindungsmöglichkeiten das Gehäuse rotieren soll, um direkt mit dem anzutreibenden Gegenstand, z. B. einem Rad, verbunden zu werden.

Die Maschine wird durch Verstellen der Exzentrizität verändert. Auf die vorstehend genannte EP-A 630 335 wird hiermit voll inhaltlich Bezug genommen.

Auch im vorliegenden Fall besteht die Aufgabe der Erfindung darin, eine Hydraulikmaschine zu schaffen, die einfach und gewichtsgünstig herzustellend, in ihrer Übersetzung stufenlos veränderbar ist, und dennoch einen möglichst hohen Wirkungsgrad ermöglicht.

Die Baugröße kann dadurch verringert werden, daß die Zylinderbohrungen nicht in einer einzigen Radialebene sternförmig angeordnet werden, sondern in zwei oder mehr in axialer Richtung hintereinander geschalteten Axialebenen. Dadurch kann - betrachtet in der Abwicklung zum Beispiel entlang des Umfanges des Zentralraumes - der Querschnitt eines Zylinderraumes teilweise in den Raum zwischen zwei benachbarte, auf einer Umfangslinie liegende, andere Zylinderräume versetzt werden, so daß der Abstand der beiden Radialebenen bzw. Zylinderebenen geringer sein kann als der Durchmesser eines Zylinderraumes.

Dabei können die beiden auf zwei oder mehr Radialebenen verteilten Zylinderräume in ihrer Drehlage, also hinsichtlich ihres oberen und unteren Totpunktes versetzt zueinander angeordnet sein, um die radialen Kräfte gegenseitig auszugleichen. Bei Anordnung der Zylinderräume in zwei Radialebenen sind diese um 180° gegenüber versetzt, so daß sich die Punkte stärkster Kompression diametral gegenüberliegen.

Für die Verstellung der Exzentrizität können dabei die beiden Radialebenen unter Umständen über einen einfachen Hebel gekoppelt werden, der in der Mitte zwischen den beiden Radialenbenen schwenkbar gelagert ist und die beiden Radialebenen bzw die auf ihnen angeordneten Kolben analog verstellt. Auch eine voneinander unabhängige Steuerung der beiden auf verschiedenen Radialebenen laufenden Einheiten ist möglich.

Die Pleuellagerung dient dazu, den bezüglich eines bestimmten Punktes des Pleuelauges, welches um die Pleuelachse herum anliegt, veränderlichen Winkel einer Pleuelstange während eines Umlaufes der Maschine auszugleichen.

Dies kann durch eine umlaufende Ringnut um die Pleuelachse herum erreicht werden, die einen radial nach außen weisenden Schlitz besitzt, der schmaler ist als der Nutenquerschnitt an seiner breitesten Stelle. Aufgrund dieses Hinterschnittes können in der Nut entsprechend angepaßte Nutensteine - in der Regel bogenförmig entsprechend der Biegung der Nut ausgebildet - geführt werden, wobei jeweils ein Nutenstein mit einer Pleuelstange verbunden ist, die zum Kolben führt.

Die Pleuelstangen ragen dabei durch den radialen Schlitz der Nut nach außen. Die Erstreckung eines Nutensteines entlang des Umfanges in der Nut muß so bemessen sein, daß bei den durch den Betrieb der Maschine auftretenden Winkelversatz der einzelnen Pleuelstangen und damit auch der damit verbundenen Nutensteine immer noch keine Kollision der einzelnen Nutensteine in der Nut untereinander zustande kommen kann.

Um eine saubere Führung und niedrige Flächenpressungen der Nutensteine in der Nut zu erzielen, sollte sich dabei jeder Nutenstein über ein möglichst großes Winkelsegment - be-trachtet in Achsrichtung - erstrecken. Andererseits ist jedoch die Größe des zur Verfügung stehenden Winkelsegmentes dadurch begrenzt, daß eine der Anzahl der Zylinder in einer Zylinderebene entsprechende Anzahl von Nutensteinen im Umfang der Nut untergebracht werden muß. Um dennoch das Winkelsegment, über welches sich ein Nutenstein erstreckt, zu maximieren, ist es vorteilhaft, die Nutensteine in radialer Blickrichtung in der Abwicklung nicht mit einer rechtwinkligen Grundfläche auszustatten, sondern mit einer hiervon abweichenden Grundform, die ein insgesamt größeres Winkelsegment abdeckt, als es der vollen Umdrehung von 360° dividiert durch die Anzahl der notwendigen Nutensteine (abzüglich des Freiraumes zwischen den Nutensteinen) entspricht.

Dies kann beispielsweise durch eine parallelogrammförmige Grundfläche jedes Gleitsteines erzielt werden, da hierbei der Überlappungsbereich, in den sich zwei benachbarte Gleitsteine mit ihren Schrägflächen hineinerstrecken, zusätzlich genutzt wird. Gleiches gilt für jeweils wechselseitig angeordnete, trapezförmige Grundflächen oder keilförmige Grundflächen, bei denen eine hervorstehende Spitze auf der einen Stirnseite des Gleitsteines einer entsprechenden Einbuchtung auf der gegenüberliegenden Stirnseite entspricht.

Besonders vorteilhaft ist die Ausbildung der Gleitsteine mit einer in der Abwicklung betrachteten Grundfläche, die der Form zweier, in axialer Richtung aneinander angrenzender und in Umfangsrichtung nur teilweise überlappender Rechtecke entspricht.

Diese Lösung ist unabhängig davon möglich, ob sich die Zylinder einer Hydraulikmaschine in einer oder in mehreren Radialebenen befinden, und unabhängig davon, ob die Verbindung der Pleuelstangen zu den Kolben - abhängig von der Form der Kolben - bzw. der Pleuelstange und den Gleitsteinen, fest oder gelenkig ist.

Ebenso kann der Exzenter eine Sternform aufweisen, in dessen zu der Bewegungsrichtung der Kolben senkrechten Aussenflächen die hinterschnittenen Nuten angeordnet sind.

Anstelle der Nutensteine können auch ein oder mehrere Fortsätze von der Rückseite der Kolben gegen das Zentrum der Maschine überstehen, und in diesem überstehenden Teil ein Langloch parallel zur Umfangsfläche des Excenters, also der Pleuelachse, ausgebildet sein. Ein in dieses Langloch passend hineinragender, darin verschieblicher Bolzen oder Kulissensteinvcerhindert das Abheben des Kolbens, läßt aber dessen Verschiebung entlang der Umfangsfläche des Excenters - egal ob vieleckig oder rund - zu.

Je nach Art der Anwendung werden Hydraulikmaschinen teilweise sehr stark danach beurteilt, wie hoch ihr Wirkungsgrad ist. Um diesen zu optimieren, müssen die auftretenden Gleitreibungen minimiert werden, was einerseits durch möglichst genaue Fertigungstoleranzen und andererseits durch optimale Schmierung, Lagerungspaarungen etc. erreicht werden soll.

In diesem Zusammenhang ist es sinnvoll, bei der Ausführung der Hydraulikmaschine als Pumpe, bei der das Gehäuse feststeht und im Inneren des Gehäuses der Zylindergrundkörper mit der Pleuelachse rotiert, nicht die Pleuelachse mit ihrem relativ kleinen Durchmesser im Gehäuse zu lagern, sondern statt dessen oder zusätzlich den Zylindergrundkörper an seinem Außenumfang im Gehäuse zu lagern.

Zu diesem Zweck sind vorzugsweise Gleitlager zu verwenden, oder es wird hydrostatisch gelagert, indem zwischen Zylindergrundkörper und Gehäuse ein permanenter Ölfilm nach einer der bekannten Methoden aufgebaut wird, auf dem die Relativbewegung stattfindet.

Vorteilhafterweise ist der Zylindergrundkörper in seinem Außenbereich nicht nur radial, sondern auch axial gegenüber dem Gehäuse zu lagern, wobei insbesondere für den Aufbau des Ölfilms mit geringem Aufwand Zuführleitungen, Zuführkanäle etc. im stillstehenden Gehäuse untergebracht und mit der Peripherie verbunden werden können.

Die Pleuelachse wird dabei separat an ihrem Umfang gegenüber dem Gehäuse gelagert, und mittels geeigneter Kupplungselemente im wesentlichen drehfest mit dem Zylindergrundkörper verbunden. Diese Kupplungselemente sollten eine ausreichende axiale, radiale und winklige Versetzung der beiden Teile zueinander ohne Beschädigung und ohne Erhöhung der auftretenden Reibungskräfte ermöglichen.

Ebenso wie die Lagerung zwischen Zylindergrundkörper und Gehäuse ist auch die Lagerung des bzw. der Pleuelaugen gegenüber der Pleuelachse vorzugsweise als Gleitlager, beispielsweise mit Teflonbeschichtung, auszubilden.

Um bei der Anwendung als Pumpe die Exzentrizität der Pleuelachse möglichst exakt einstellen zu können, kann diese Pleuelachse auf der der Antriebsseite abgewandten Seite mit einer in radialer Richtung größerer Steuerplatte verbunden sein, die durch Einwirken einer Steuerstange radial verschoben wird. Dadurch wird die Exzentrizität und damit das Fördervolumen der Pumpe eingestellt.

Eine andere Lösung der Verstellung der Exzentrizität besteht darin, daß die Pleuelachse aus zwei ineinanderlaufenden, jeweils exzentrischen Buchsen, also einem sogenannten Doppelexzenter, besteht. Das bzw. die Pleuelaugen laufen dann auf der äußeren Umfangsfläche der äußeren Exzenterbuchse, während sich die innere Umfangsfläche der inneren Exzenterbuchse auf einem zentrischen Rundbolzen, der beispielsweise. mit dem stillstehenden Gehäuse verbunden sein kann, abstützt.

Durch Verdrehung der beiden Exzenterbuchsen gegeneinander wird die Exzentrizität der Pleuelaugen eingestellt: wenn sich die jeweils dünnsten Stellen und die jeweils dicksten Stellen der beiden exzentrischen Buchsen in Deckung befinden, ist die maximale Exzentrizität eingestellt.

Werden die beiden Exzenterbuchsen aus dieser Stellung gegenläufig verstellt, so nimmt die Exzentrizität ab, bis sich die dünnste Stelle der einen Exzenterbuchse mit der dicksten Stelle der anderen Exzenterbuchse deckt. Falls beide Exzenterbuchsen eine übereinstimmende Stärke im dicksten und im dünnsten Bereich aufweisen, ist in dieser Stellung eine koaxiale Mittellage mit der Exzentrizität 0 erreicht.

Eine andere Möglichkeit besteht darin, bei einer stillstehenden Exzenterachse innerhalb der Exzenterachse und quer zu deren Symmetrieachse einen Steuerkolben verschiebbar in einem passenden Hohlraum aufzunehmen, so daß beidseits des Steuerkolbens Arbeitsräume entstehen. Durch Beaufschlagen jeweils eines dieser Arbeitsräume an dem Steuerkolben mit Steuermedium, wobei als Steuermedium auch druckseitiges Hydraulikmedium verwendet werden kann, kann die Pleuelachse gegenüber dem feststehenden Steuerkolben verstellt und damit die Exzentrizität der Hydraulikmaschine variiert werden.

Wenn dagegen die Pleuelachse in ihrer Mitte durchgängig hohl ausgebildet sein soll, um dort z.B. einen bei stillstehender Pleuelachse durchgehenden Antrieb für den rotierenden Zylindergrundkörper zu schaffen, empfiehlt sich eine andere Ausbildung, in dem der Steuerkolben nicht im Inneren der Pleuelachse, sondern in axialer Richtung außerhalb des Bereiches der eigentlichen Hydraulikmaschine im Zylinder-grundkörper untergebracht wird.

Die Verschiebung des Steuerkolbens bewirkt dann über wenigstens einen, vorzugsweise zwei beidseits des mittigen Durchbruches der Pleuelachse angeordnete Hebel die Exzen-trizität der Pleuelachse. Vorzugsweise handelt es sich bei den Hebeln um zweiarmige, etwa rechtwinklig ausgebildete Hebel, sodaß der Steuerkolben parallel zur Symmetrieachse der Hydraulikmaschine im Zylindergrundkörper geführt werden kann und auf das eine freie Ende des Hebels einwirkt, während das andere freie Ende des Hebels mit der still-stehenden Pleuelachse verbunden ist. Dies kann vorzugsweise über einen Nutenstein geschehen, der gelenkig mit diesem freien Ende des Hebels verbunden ist und in der Pleuelachse parallel zu deren Symmetrieachse geführt ist, um bei Verschwenken des Hebels auch die axiale Verlagerung seines freien Endes auszugleichen, während die radiale Verlagerung seines freien Endes die Verstellung der Exzentrizität der Pleuelachse bewirkt.

Eine weitere Möglichkeit besteht darin, daß eine hydraulische, Zylinder und darin laufende Kolben umfassende Verstelleinheit zwischen dem Exzenter und dem Gehäuse angeordet wird. Dabei kann ein mit dem Gehäuse fest verbundenes Teil den Kolben bilden oder mit diesem fest verbunden sein, und der Zylinder direkt im Exzenter ausgebildet sein, sodaß eine Beaufschlagung der Verstelleinheit direkt den Exzenter verschiebt.

Ebenso kann die Verstelleinheit außerhalb des Exzenters im Gehäuse untergebracht und der Kolben mit dem Exzenter verbunden sein. Auch kann eine Verstelleinheit mehrere axial versetzte Maschineneinheiten steuern.

Eine weitere Möglichkeit besteht darin, am Exzenter eine Schräge auszubilden, und ein Bauteil mit einer Gegenschräge eng anliegend an der Schräge in einer etwa parallel zur Symmetrieachse der Maschine zu verschieben. Durch die Keilwirkung wird die Exzentrizität verstellt.

Eine besonders einfache Art der Zuführung des Mediums sind Steuernieren entlang des Innenumfanges des Gehäuses, die mit den radial äußeren Enden der Arbeitsräume in Verbindung stehen.

Eine weitere Verringerung der Bauteile und Verbesserung der Montagemöglichkeiten ergibt sich dadurch, daß Zylinder-grundkörper und Gehäuse teilweise funktionsvereinigt werden, falls sie gemeinsam drehen:

Zu diesem Zweck laufen die einzelnen Kolben in Laufbuchsen, die auf der außenliegenden Stirnseite geschlossen sind. Diese Laufbuchsen sind jeweils zwischen zwei Hälften des Gehäuses befestigt, dessen Teilungsebene die Radialebene ist, auf der sich die Kolben und damit auch die Laufbuchsen befinden. Im Zwischenraum zwischen den Laufbuchsen können die beiden Hälften des Gehäuses problemlos nach Einbringen der Laufbuchsen miteinander verschraubt werden. Zur exakten Lagepositionierung können die Laufbuchsen außenliegende Vorsprünge aufweisen, die in entsprechend exakt positionierte Ringnuten der Gehäusehälften passen.

Derartige Laufbuchsen können jedoch auch innerhalb des Zylindergrundkörpers bezüglich diesem schwenkbar angeordnet sein, und zwar um eine Schwenkachse, die parallel zur Drehachse der Hydraulikmaschine ist. Die Schwenkbarkeit kann durch einen außen an den Laufbuchsen angeordneten Schwenkzapfen gegeben sein, oder durch eine insgesamt teilkreisförmige Außenkontur der gesamten Laufbuchse, die in einer entsrpechenden Innenkontur des Zylindergrundkörpers gelagert ist.

Dadurch können die Winkelveränderungen, die eine einteilige Pleuelstange gegenüber der Exzenterachse während eines Umlaufes vollzieht, ausgeglichen werden, ohne die Verbindung zwischen Kolben und Pleuelstange gelenkig ausbilden zu müssen, was ebenfalls durch eine teilkreisförmige Kontur zwischen diesen Bauteilen zwischen Kolben und äußerem Ende der Pleuelstange möglich wäre.

Um das Anlaufverhalten und Drehmoment des hydraulischen Motors zu verbessern, kann ferner vorgesehen werden, die Zylinderräume nicht exakt radial im Zylindergrundkörper anzuordnen, sondern bezüglich des Zentrums des Zylindergrundkörpers tangential, so daß die Bewegungsrichtung der darin geführten Kolben zur radialen Richtung bei allen Kolben zumindest einer Zylinderebene einen Winkel von 3° bis 60°, vozugsweise von 8° bis 20°, einnimmt.
Dadurch entsteht vor allem beim Beaufschlagen des hydraulischen Motors im Stillstand, also zum Anlaufen, ein höheres Drehmoment, so daß die Überwindung der Haftreibung in der hydraulischen Maschine bereits mit geringerem Druck des Hydraulikmediums möglich ist.

Die Verbindung der Pleuelstangen mit dem Pleuelauge bzw. den Gleitsteinen muß selbstverständlich an diese Schrägstellung der Zylinderräume gegenüber der radialen Richtung angepaßt werden.

Eine weitere Verbesserung ergibt sich, wenn die einzelnen Arbeitsräume der Hydraulikmaschine nicht von außen, also über den Zylindergrundkörper, mit Medium versorgt werden, sondern von innen:

Dabei wird das Hydraulikmedium über die Exzenterachse und entsprechende radiale Bohrungen in dem Pleuelauge bzw. dem Gleitstein, der Pleuelstange und dem Kolben in den Arbeitsraum zugeführt. Dies bietet die zusätzliche Möglichkeit, alle relativ zueinander bewegten Teile an ihren Kontaktflächen hydrostatisch zu lagern, indem dort über großflächige, flache Drucktaschen druckseitiges Hydraulikmedium zugeführt wird. Dies betrifft sowohl die Gleitfläche zwischen den Gleitsteinen und der Lauffläche der Nut, als auch die Kontaktflächen zwischen den Kolben und dem Zylindergrundkörper bzw. den Laufbuchsen, den Laufbuchsen und dem Zylindergrundkörper bzw. die bewegliche Kontaktfläche zwischen gelenkig miteinander verbunderer Pleuelstange und der Rückseite des Kolbens.

Verschiedene Ausführungsformen gemäß der Erfindung sind im folgenden beispielhaft näher beschrieben. Es zeigen:
- Figur 1: eine stirnseitige Ansicht der Hydraulikmaschine als Pumpe,
- Figur 2: eine Schnittdarstellung der Pumpe gemäß Figur 1 entlang der Linie III-III,
- Figur 3: eine Darstellung ähnlich der Figur 2 mit anderer Lösung der Exzentrizitätsverstellung,
- Figur 4: die Detaildarstellung eines Gleitsteines,
- Figur 5: eine Seitenansicht einer als Motor eingesetzten Hydraulikmaschine,
- Figur 6: die Seitenansicht einer anderen Motor-Variante,
- Figur 7: eine stirnseitige Darstellung mit anderer Lösung der Exzentrizitätsverstellung, und
- Figur 8: eine Seitenschnittdarstellung hierzu.

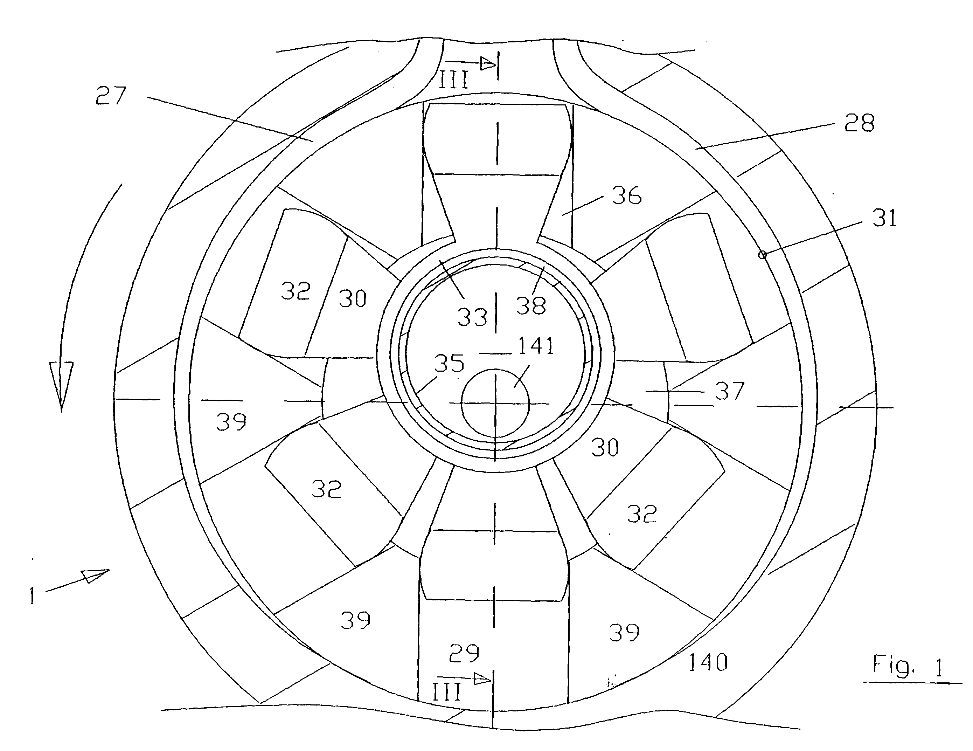

Fig. 1 zeigt eine aufgeschnittene Darstellung der Pumpe 1 in Blickrichtung der Achse 141.

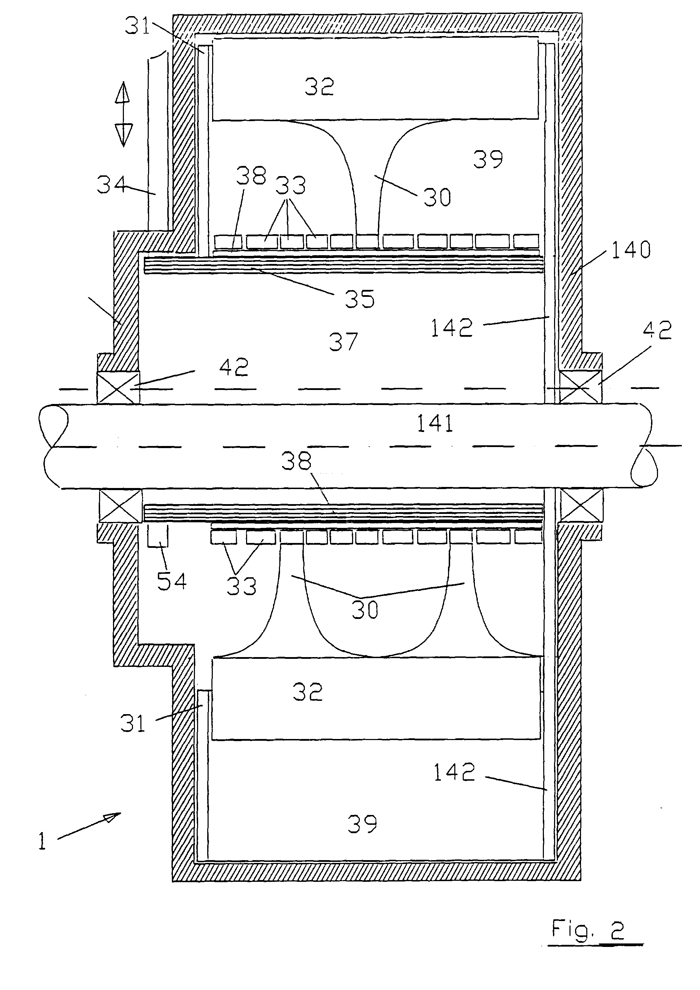

Zum besseren Verständnis sind in den Fig. 1 und 2 die stillstehenden Teile der Hydraulikmaschine schraffiert dargestellt, während die rotierenden Teile unschraffiert sind.

Die Pumpe gemäß Fig. 1 ist in Fig. 2 in aufgeschnittener Seitenansicht, also in Blickrichtung III-III der Fig. 1, dargestellt.

Wie Fig. 1 zeigt, läuft in einem Gehäuse 140 der Zylindergrundkörper 31 mit seinen radial kreisförmig angeordneten Zylinderräumen 36. Der Zylindergrundkörper 31 wird von der zentralen Achse 141 angetrieben, mit der er drehfest mittels einer auf einer Stirnseite angeordneten Stirnscheibe 142 verbunden ist, wie besser in Fig. 2 zu erkennen. Die zentrale Achse 141, die von einem Antriebsaggregat, etwa dem Verbrennungsmotor eines Kraftfahrzeuges oder der Tretkurbelachse eines Fahrrades drehfest verbunden ist, ist mittels der Lager 42 gegenüber dem Gehäuse 140 gelagert.

Die einzelnen Kolben 32 bewegen sich aufgrund ihrer exzentrischen Lagerung auf der ebenfalls stillstehenden exzentrischen Pleuelachse 35 während eines Umlaufs einmal in ihrem Zylinderraum auf und ab, wodurch eine Ansaug- und eine Kompressionsphase erreicht wird, indem bei einem in Pfeilrichtung drehenden Aggregat Hydraulikmedium über die Zuleitung 27 niederdruckseitig - also dem Arbeitsraum 29 im Zylinderraum 36 außerhalb der Kolben 32 von außen, über das Gehäuse 140 - zugeführt und über die Leitung 28 hochdruckseitig abgeführt wird.

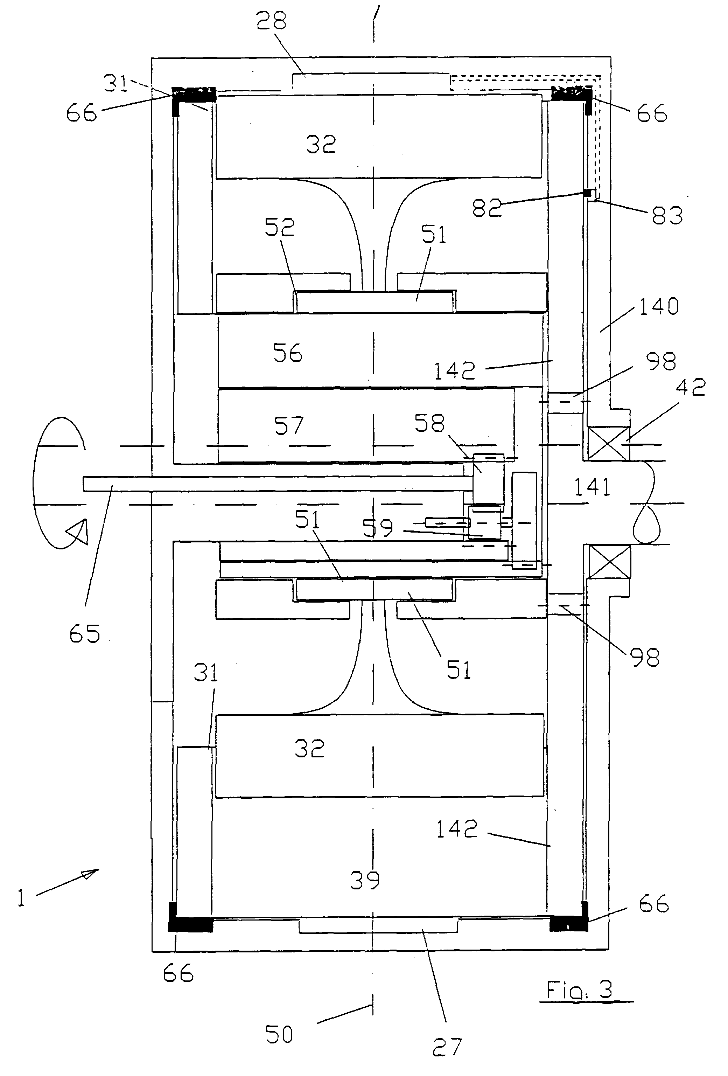

Dabei ist die Exzentrizität und damit das Hubvolumen der Pumpe 1 veränderbar, indem die stillstehende, exzentrische Pleuelachse 35 mittels einer radial beweglichen Schubstange 34, die sich nach außerhalb des Gehäuses 40 erstreckt, in ihrer Exzentrizität gegenüber der zentralen Achse 141 verstellt werden kann, wie in Fig. 3 zu erkennen.

Fig. 1 zeigt, wie jeder Kolben 32 mittels wenigstens einer Pleuelstange 30 mit seinem Pleuelauge 33 verbunden ist, welches die exzentrische, stillstehende Pleuelachse 35 eng, aber drehbar umschließt.

Da Kolben 32, Kolbenstange, auch Pleuelstange genannt, 30 und Pleuelauge 33 fest, vorzugsweise einstückig, miteinander verbunden sind, muß jeder Pleuelstange und damit jedem Kolben 32 ein separates Pleuelauge 33 zugeordnet sein, um die während des Umlaufs auftretenden Auslenkungen des Kolbens 32 gegenüber dem Zylinderraum 36 zu ermöglichen.

Zu diesem Zweck sind - wie in Fig. 2 zu erkennen - die einzelnen Pleuelaugen 33 in axialer Richtung hintereinander angeordnet und so schmal ausgebildet, daß die für die entsprechende Kolbenanzahl erforderliche Anzahl von Pleuelaugen innerhalb der axialen Erstreckung des Zylindergrundkörpers, also der zwischen den Zylinderräumen 36 bestehenbleibenden Zwischensegmente 39, untergebracht werden können. Dabei sind manche Kolben 32 über nur eine Pleuelstange so mit nur einem Pleuelauge 33 verbunden, andere Kolben dagegen, wie in der Fig. 2 in der unteren Bildhälfte dargestellt, stützen sich über zwei im axialen Abstand zueinander angeordnete, einstückige Pleuelstangen 30 auf zwei im gleichen Abstand angeordneten Pleuelaugen 33 ab, um eine in axialer Richtung gleichmäßige Einleitung der radialen Kolbenkräfte in die stillstehende, exzentrische Pleuelachse 35 zu gewährleisten.

Die Pleuelaugen 33 laufen dabei nicht direkt auf der Pleuelachse 35, sondern auf einer dazwischen angeordneten Zwischenhülse 38, die mit den Pleuelaugen 33 rotiert und die Funktion eines Verschleißteiles erfüllt.

Um die aus der Fig. 1 ersichtlichen Veränderungen der Schräglage der Kolben 32 gegenüber den Zylinderräumen 36 zu ermöglichen, weisen die Kolben in der Seitenansicht der Fig. 1, also in Blickrichtung der Achsen, eine ballige Außenkontur auf, die einem Mittelbereich eines Kreises entspricht und damit - bei zylindrischem Querschnitt der Zylinderräume 36 - dem mittleren Bereich einer Kugel. Dadurch wird bei jeder möglichen Schrägstellung des Kolbens 32 in dem Zylinderraum 36 immer eine abdichtende Anlage zwischen Kolben und Zylinder vorhanden sein.

Eine etwas abgewandelte Bauform der Pumpe gemäß Fig. 2 ist in Fig. 3 dargestellt:

Die Verstellung der Exzentrizität der die Kolben abstützenden Pleuelachse 35 ist dadurch realisiert, daß die Pleuelachse aus zwei ineinanderlaufenden, jeweils exzentrisch gebohrten, Exzenterbuchsen 56, 57 besteht. Die innere Exzenterbuchse 57 stützt sich dabei mit ihrem Innenumfang auf einem gehäusefesten, konzentrischen Fortsatz ab und auf der Außenfläche der äußeren Exzenterbuchse 56 läuft das Pleuelauge 33', 33.

Von der Außenseite des Gehäuses erstreckt sich eine Welle 65 durch den Fortsatz hindurch bis auf die antriebsseitige Stirnseite des Fortsatzes und trägt dort ein erstes Zahnrad 58, welches einerseits mit einer Innenverzahnung der inneren Exzenterbuchse 57 kämmt und andererseits mit einem weiteren Zahnrad 59, welches seinerseits wiederum in einer Innenverzahnung der äußeren Exzenterbuchse läuft.

Dadurch werden die beiden Exzenterbuchsen 56, 57 gegensinnig jeweils um gleiche Winkelbeträge verdreht, wenn die Welle 65 von außen betätigt wird.

Bei der Lösung gemäß Fig. 3 sind die einzelnen Kolben 32 nicht über ihre Kolbenstangen 30 mit wenigstens jeweils einem eigenen Pleuelauge 33 verbunden, die in axialer Richtung nebeneinander angeordnet sind.

Vielmehr befindet sich am inneren Ende jeder Pleuelstange 30 ein Gleitstein 51, der in einer nach außen offenen, hinterschnittenen Nut 52 läuft und entlang des Umfangs der äußeren Exzenterbuchse 56 soweit entlang der Nut 52 hin und her verschoben werden kann, wie es der Versatz während eines Umlaufes der Maschine erfordert.

Die hinterschnittene, nach außen offene Nut 52 wird durch zwei die Gleitsteine 51 von außen her teilweise übergreifende Ringe 33, 33' gebildet, die gemeinsam das Pleuelauge bilden, in welchem die Gleitsteine 51 aller Kolben 32 laufen.

Um eine gute Krafteinleitung von den Kolben 32 über die Kolbenstangen 30 in die Pleuelachse, also die Außenfläche des Außenexzenters 56 der Fig. 3, zu gewährleisten, sollten sich die Gleitsteine 51 über ein möglichst großes Winkelsegment, betrachtet in Achsrichtung der Hyraulikmaschine, erstrecken. Auf der anderen Seite dürfen sich die Gleitsteine 51 bei ihrer Bewegung entlang des Umfanges nicht gegenseitig behindern.

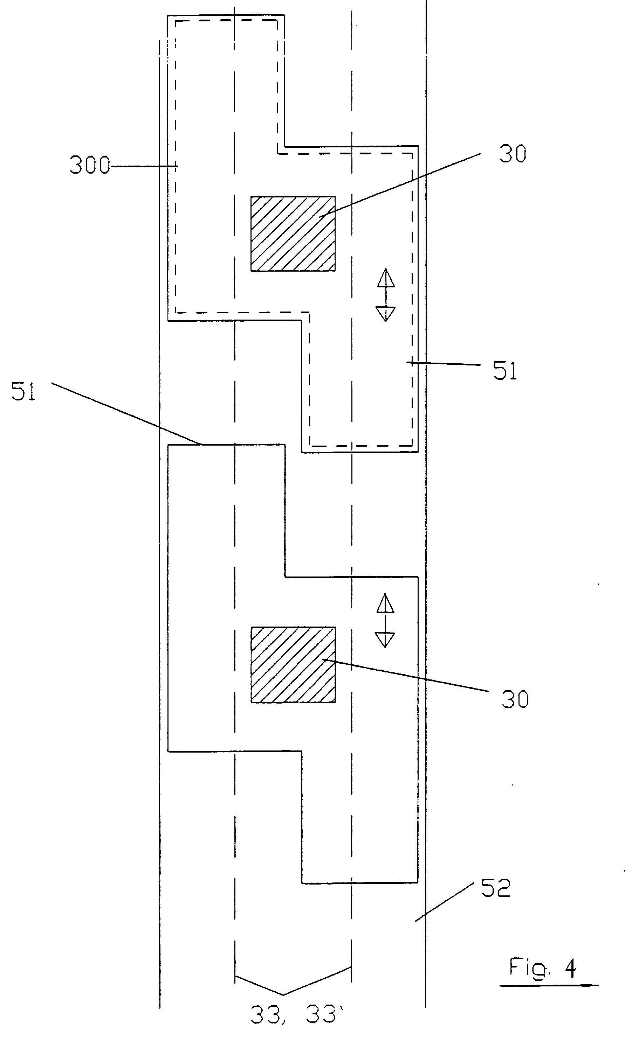

Eine besonders günstige Form der Gleitsteine ist daher in Fig. 4 in einer teilweisen Abwicklung der Nut 52 dargestellt: In dieser Aufsicht haben die Gleitsteine 51 die Form zweier in Umfangsrichtung gegeneinander versetzter Rechtecke, die sich teilweise überlappen und in diesem Überlappungsbereich mit der Kolbenstange 30 verbunden sind. Anders definiert besteht die Grundfläche aus einem Rechteck, von dessen Enden jeweils wieder ein anderes Rechteck rechtwinklig, aber in entgegengesetzte Richtungen, parallel zur Umfangsrichtung, abstrebt.

Dadurch bilden sich an den Stirnseiten der Gleitsteine 51 auf abwechselnden Seiten Aussparungen, in die die entsprechenden Fortsätze des nächsten Gleitsteines hineinragen können.

Dadurch ist eine Länge der Gleitsteine 51 in Richtung der Abwicklung möglich, die größer ist als die Durchmesser der zugehörigen Kolben 32, so daß eine gute Führung der Gleitsteine 51 in der Nut 52 gewährleistet ist. Eine gute Abstützung ist durch großflächige Drucktaschen 200 in der Gleitfläche der Gleitsteine 51 gegeben, die mit Hydraulikmedium beaufschlagt werden.

Weiterhin zeigt Fig. 3, daß der Zylindergrundkörper 31 über Gleitlager 66 an seinem Aussenflanken oder an seinem Außenumfang zwischen den Außenkanten des Zylindergrundkörpers in den gegen-überliegenden Bereichen des Gehäuses 140 gelagert ist.

Aufgrund des größeren Lagerdurchmessers als bei Lagerung an der zentralen Achse 141 wird der Zylindergrundkörper 31 wesentlich exakter im Gehäuse gelagert. Vorzugsweise wird im Bereich des Gleitlagers 66 zwischen den Kontaktflächen durch eingearbeitete Drucktaschen mittels des druckseitigen Hydraulikmediums ein Ölfilm, also eine hydrostatische Lagerung, erzeugt, so daß nach Anlauf der Hydraulikmaschine keine direkte Materialberührung mehr stattfindet.

Im stirnseitigen Spalt zwischen dem Zylindergrundkörper 31 und dem Gehäuse 140 ist ferner jeweils eine ringförmig umlaufende Dichtung vorgesehen, die vorzugsweise als berührungsfreie Dichtung ausgebildet ist, um auf diesem Wege kein Schmiermittel in Richtung auf das Lager 42 hindurchtreten zu lassen.

Die in Fig. 3 dargestellte Dichtung 82 ist eine berührende Dichtung, die in einer aufnehmenden Nut 83 des Gehäuses 140 liegt, und vom Gleitgrund her wiederum mittels druckseitigem Hydraulikmedium, welches über gestrichelt eingezeichnete Bohrungen von der druckseitigen Zuleitung 28 zugeführt wird, so daß die Dichtung 82 gegen den abzudichtenden Zylindergrundkörper 31 gedrückt wird.

Um Schwingungen oder einen unrunden Lauf der zentralen antreibenden Achse 141 nicht auf den exakt am Außenumfang gelagerten Zylindergrundkörper zu übertragen, sind der Zylindergrundkörper 31 und die zentrale Achse 141 nicht fest, sondern über eine Kupplung 98 drehfest miteinander verbunden. Ein Winkelversatz zwischen dem Zylindergrundkörper 31 und der zentralen Antriebsachse 141, die separat über Lager 42 im stillstehenden Gehäuse 140 gelagert ist, ist dadurch möglich. Trotz der Verschiebemöglichkeit der Gleitsteine 51 entlang des Umfanges der Nut 52 muß zusätzlich ein Winkelversatz zwischen dem Gleitstein und dem Kolben 32 möglich sein.

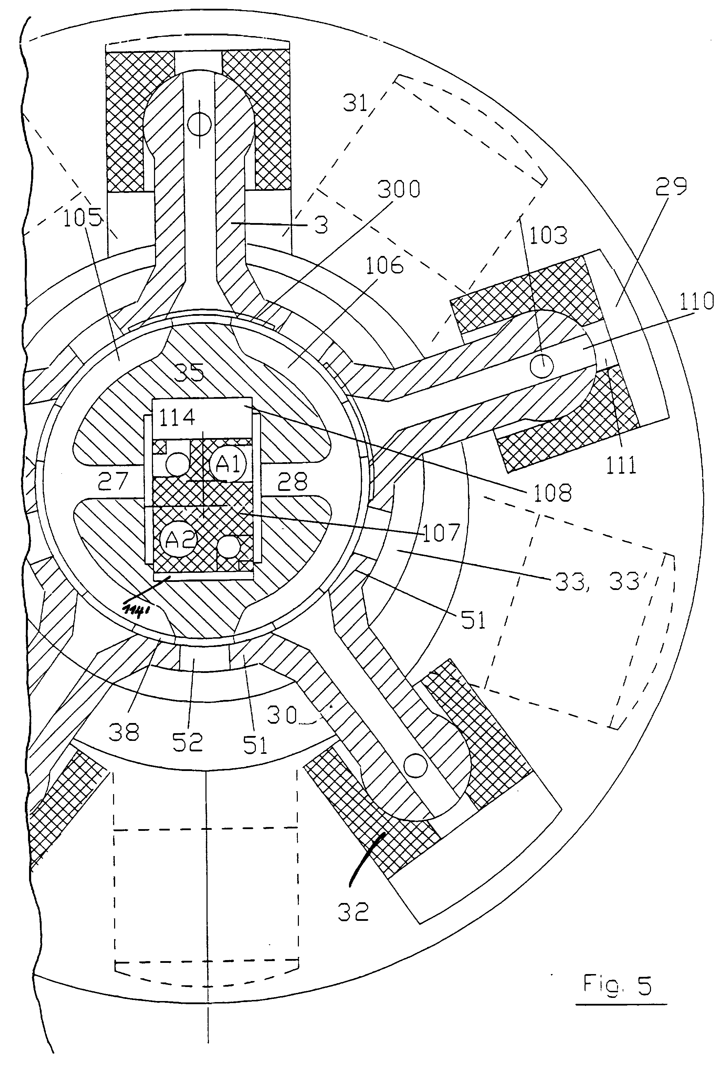

In Fig. 5 ist in einer Querschnittsdarstellung eine vorzugsweise als Motor betriebene Hydraulikmaschine dargestellt, in der die Gleitsteine 51 und die Kolbenstangen 30 einstückig ausgebildet sind, jedoch ein Verschwenken zwischen dem äußeren Ende der Kolbenstange 30 und der Rückseite des Kolbens 32 möglich ist. Dies geschieht durch eine in Blickrichtung der Fig. 5, also in Achsrichtung der Hydraulikmaschine, teilweise kugelförmige, oder in Blickrichtung der Fig. 5 zylindrische Außenkontur des äußeren Endes 104 der Pleuelstange 30, die in einer entsprechend geformten Innenkontur auf der Rückseite des Kolbens 32 ausgebildet ist. Als Schwenkachse dient ein beidseits, also vor und hinter der Zeichenebene der Fig. 5, von der Kolbenstange in der Mitte seiner Kugelkontur nach außen ragender Schwenkzapfen 103, der im Kolben 32 gelagert ist.

Als weitere Besonderheit ist die Maschine gemäß Fig. 5 zwar eine außen beaufschlagte Hydraulikmaschine, wobei die Zuführung des Hydraulikmediums jedoch von innen her, also über den Exzenter 35 und radiale Bohrungen in der Pleuelstange 30 und dem Kolben 32 erfolgt.

Dies reduziert zwar den wirksamen Kolbenquerschnitt, ermöglicht jedoch eine relativ einfache Versorgung aller Gleitstellen mit Hydraulikmedium, indem über - in den Fig. nicht dargestellte - Bohrungen mit geringem Querschnitt von den Hauptzuführdurchgängen 110 der Pleuelstange 30 bzw. 111 des Kolbens 32 aus die Gleitstellen versorgt werden. Dies betrifft die Kontaktflächen zwischen Kolben 32 und Zylindergrundkörper 31, die Lagerpfanne zwischen dem äußeren Ende der Pleuelstange 30 und der Rückseite des Kolbens 32 und die Drucktaschen 300 im Gleitstein 51 gegenüber der Nut 52, sowie eventuell die Lagerung zwischen dem Zylindergrundkörper und dem Gehäuse.

Die Versorgung der Durchlässe 110 am innenliegenden Ende der Pleuelstangen 30 mit hochdruck- und niederdruckseitigem Hydraulikmedium entsprechend der Drehlage der Kolbenstange 30 erfolgt über zwei sich über jeweils etwas weniger als 180° erstreckende Steuernieren 105, 106, die mit jeweils der hochdruckseitigen Zuführung 28 bzw. niederdruckseitigen Zuführung 27 in Verbindung stehen. Eine zwischen den Gleitsteinen 52 und dem Exzenter 35 angeordnete, als Verschleißteil mitlaufende Zwischenhülse 38 muß ebenfalls entsprechende Durchlässe im Bereich der einzelnen Kolbenstangen 30 besitzen.

Die Exzentrizität dieses Motors ist dadurch verstellbar, daß in dem Exzenter 35 quer zu dessen Symmetrieachse ein Steuerkolben 107 in einem entsprechenden Hohlraum 108 des Exzenters 35 dicht anliegend verschiebbar ist. Der Steuerkolben 108 ist dabei mit einem außen liegenden Punkt fest verbunden, so daß durch wechselseitige Beaufschlagung der beidseits des Steuerkolbens 107 im Hohlraum 108 entstehenden Arbeitsräume 114, 114' der Exzenter 35 gegenüber dem Steuerkolben 107 exzentrisch verschoben und dadurch das Schluckvolumen des Motors verstellt wird.

Als Steuermedium kann dabei direkt das Hydraulikmedium verwendet werden.

Wie in Fig. 5 weiterhin mit gestrichelten Linien dargestellt, besteht die Hydraulikmaschine nicht nur aus den im Vordergrund dargestellten fünf Kolben, sondern weiteren fünf Kolben in einer dahinter liegenden, zweiten Radialebene, die nicht nur in ihrer Drehlage zwischen den Kolben der ersten Radialebene aus Gründen der Platzersparnis angeordnet sind, sondern hinsichtlich ihres Totpunktes zusätzlich um 180° zur ersten Radialebene versetzt angeordnet sind.

Dadurch ist es möglich, den Steuerkolben 107 mit dem dahinterliegenden Steuerkolben 107' der zweiten Radialebene über einen Hebel mechanisch zu verbinden, der in der Mitte zwischen den beiden Radialebenen gelagert ist, so daß die Verstellung des Steuerkolbens 107 über die Hebelverbindung eine analoge Verstellung des Steuerkolbens bzw. Exzenters der dahinterliegenden Radialebene bewirkt.

Der Steuerkolben 107 kann anstelle innerhalb des Exzenters 35 auch außerhalb in einem ortsfesten Zylinderraum angeordnet sein, und über z. B. eine mechanische Hebelverbindung mit dem Exzenter 35 verbunden werden, dessen Verstellung er bewirken soll. Dadurch ist zwar eine leichtere Zugänglichkeit des Steuerkolbens 107 gegeben, jedoch wird das Bauvolumen der Maschine vergrößert.

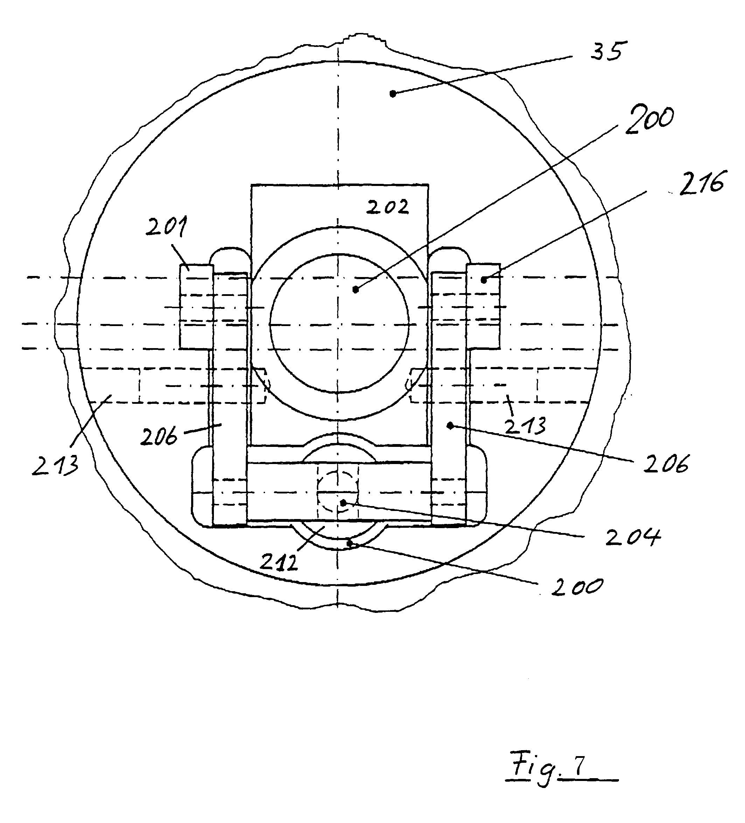

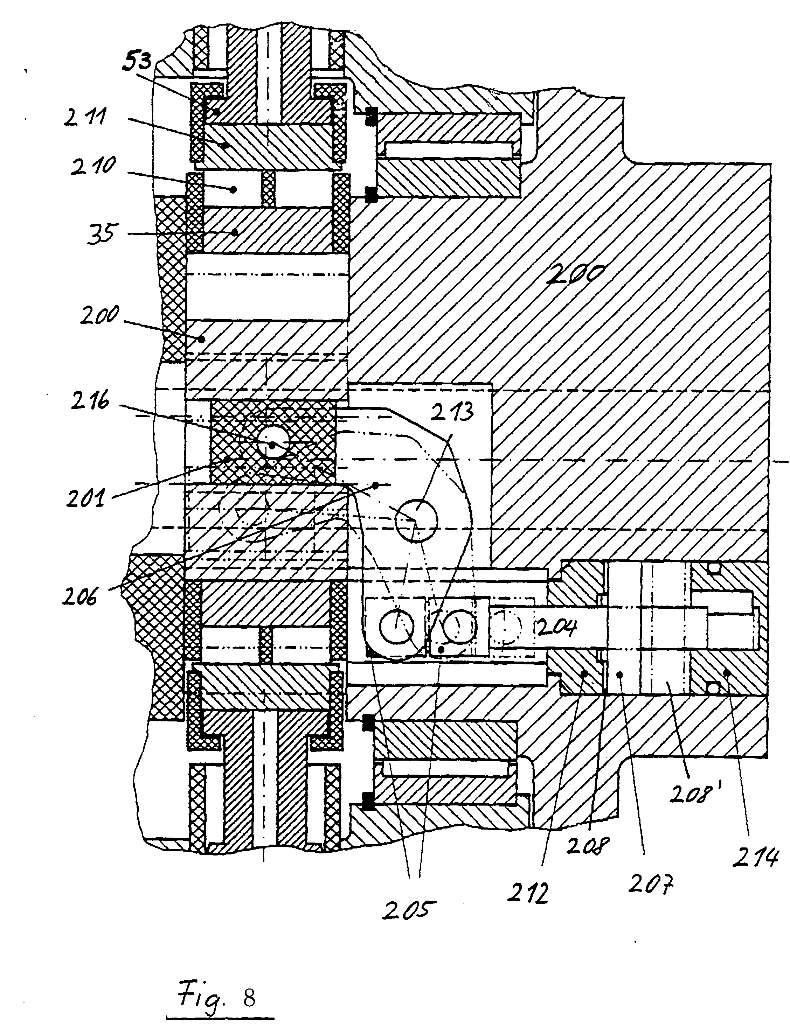

Eine solche Lösung ist in den Figuren 7 und 8 skizziert:

In Fig. 8 ist am linken Rand der Darstellung ein Teilschnitt des Zentrums einer Hydraulikmaschine dargestellt.

Dabei soll die Pleuelachse 35 in ihrer Exzentrizität verstellt werden, auf welcher über Wälzkörper 210 mit dazwischen angeordnetem Gleitring 211 die als Nutensteine 53 ausgebildeten inneren Enden der Pleuelstangen laufen.

Zu diesem Zweck ist außerhalb des axialen Bereiches der Hydraulikmaschine in einem ortsfesten Gehäuseteil 200 der Steuerkolben 207 parallel zur Symmetrieachse der Hydraulikmaschine in einem Hohlraum geführt, welcher durch Buchsen 212 und 214 begrenzt wird, sodaß beidseits des Steuerkolbens 207 die mit Steuermedium beaufschlagten Arbeitsräume 208, 208' zur Verfügung stehen. Vom Steuerkolben 207 ragt eine Kolbenstange 204 in Richtung auf die Hydraulikmaschine und ist über ein Gelenk 205, welches als quer zur Kolbenstange 204 verlaufende Achse ausgebildet ist, mit dem freien Ende des Winkelhebels 206 verbunden.

Der Winkelhebel ist in seinem mittleren Bereich in dem ortsfesten Gehäuseteil 200 mittels eines Bolzens 213 gelagert. Dadurch verlagert sich sein anderes freies Ende bei Betätigung des Steuerkolbens 207 nicht nur radial, sondern auch axial.

Deshalb ist das andere freie Ende des Hebels 206, welches sich im Bereich der Pleuelachse 35 befindet, über ein Gelenk 216 mit einem Nutenstein 201 verbunden, welcher parallel zur Symmetrieachse der Hydraulikmaschine verschiebbar in der Pleuelachse 35 geführt ist.

Um eine freie durchgehende Öffnung z.B. für einen Durchtrieb, in der Mitte der Pleuelachse 35 zu ermöglichen, ist der Winkelhebel 206 und der Nutenstein 201 nicht mittig in der Pleuelachse 35 angeordnet, sondern, wie in der Frontansicht der Fig. 8 dargestellt, sind diese Teile doppelt vorhanden, und befinden sich beidseits außerhalb des durchgehenden Hohlraumes 202, der mit der Pleuelachse 35 ausgebildet ist.

Die Kolbenstange 204 des Steuerkolbens 207 wirkt dabei auf die als Gelenk wirkende Achse 205, auf deren Enden beidseits jeweils einer von zwei Hebeln 206 angeordnet ist, welche an ihren anderen freien Enden je einen Nutenstein 201 aufweisen.

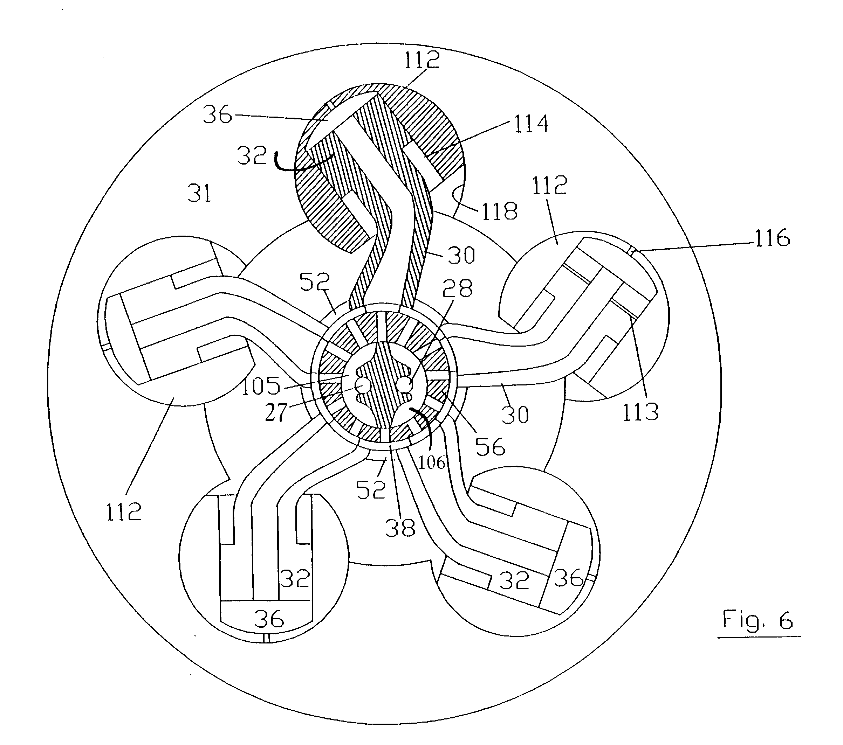

Eine gegenüber Fig. 5 abgeänderte Bauform zeigt Fig. 6. Ein Unterschied besteht darin, daß die Zylinderräume 36 nicht radial, sondern schräg tangential zur Drehachse der Hydraulikmaschine angeordnet sind. Dies verbessert das Anlaufverhalten eines hydraulischen Motors und ergibt ein höheres Drehmoment.

Da die Kolbenstange 30 dennoch etwa radial mit ihrem inneren Ende als Gleitstein 51 ausgebildet in einer entsprechenden, nach außen offenen Nut 52 laufen soll, ist die Pleuelstange 30 gekröpft ausgebildet.

Auch bei dieser Lösung erfolgt die Zuführung des Hydraulikmediums vom Inneren der Hydraulikmaschine her, also durch radiale Durchgänge 110, 111 in der Pleuelstange 30 und dem Kolben 32.

Im Unterschied zur Lösung gemäß Fig. 5 ist die Winkelveränderung zwischen der Pleuelstange 30 und dem Zylindergrundkörper 31, der während jeder Umdrehung auftritt, statt durch eine gelenkige Verbindung zwischen dem Kolben 32 und der Pleuelstange 30 dadurch gelöst, daß der Kolben 32 in einer Laufbuchse 112 läuft, in welcher der Zylinderraum 36 ausgebildet ist. Die Laufbuchse 112 ist ihrerseits um eine parallel zur Drehachse der Hydraulikmaschine verlaufende Achse schwenkbar im Zylindergrundkörper 31 gelagert, was gemäß Fig. 6 durch eine teilweise kreisförmige Außenkontur der Laufbuchse 112 gegeben ist, die in einer entsprechenden Innenkontur 118 des Zylindergrundkörpers 31 gelagert ist.

Dadurch ist eine einstückige Ausbildung zwischen Kolben 32 und Pleuelstange 30 möglich. Im Kolben 32 sind die Querbohrungen 113 von der mittleren Durchgangsbohrung zur Gleitfläche zwischen Kolben 32 und Laufbuchse 112 zu erkennen, die das Hydraulikmedium zum Aufbau einer hydrostatischen Lagerung in die dortigen großflächigen, flachen Drucktaschen 114 zuführen. Ebenso wird aus dem Zylinderraum 36 über eine Zuführbohrung 116 die Kontaktfläche zwischen der Laufbuchse 112 und dem Zylindergrundkörper 113 hydrostatisch unterstützt.

Bei der Lösung gemäß Fig. 6 ist zusätzlich die Ausbildung des Exzenters 35 und dessen Verstellung anderes gelöst:

Ähnlich wie in Fig. 3 besteht der Exzenter 35 aus zwei gegenläufigen Exzentern, einem Innenexzenter und einem Außenexzenter 56. Zusätzlich laufen die als Gleitsteine 51 ausgebildeten inneren Enden der Pleuelstange 30 nicht direkt auf der Außenfläche des Außenexzenters 56, sondern einer dazwischen angeordneten Zwischenhülse 38. Der Innenexzenter ist dabei wie der Exzenter 35 gemäß Fig. 5 mit zwei über etwas weniger als 180° sich am Außenumfang abwechselnd erstreckende Steuernieren 105, 106 ausgestattet, die mit den entsprechenden Zuführleitungen 27, 28 für hochdruck- und niederdruckseitiges Hydraulikmedium in Verbindung stehen. Im Gegensatz zur Lösung der Fig. 3 ist deshalb der Innenexzenter vorzugsweise stillstehend, so daß lediglich der äußere Exzenter 56 verdreht wird, der eine Vielzahl von radialen Durchlässen aufweist, um das Hydraulikmedium von den entsprechenden Steuernieren 105, 106 des Innenexzenters zu den entsprechenden Öffnungen in den Pleuelstangen 30 und umgekehrt weiterzuleiten.

## Patentansprüche

1. Hydraulikmaschine mit in einem Zylindergrundkörper (31) sternförmig angeordneten Zylinderräumen (36),
- die sich im Zentrum des Zylindergrundkörpers (31) zu einem Zentralraum (37) vereinigen,
- durch welchen sich exzentrisch zum Zylindergrundkörper (31) eine relativ hierzu rotierende Pleuelachse (35) hindurch erstreckt, und
- in den Zylinderräumen (36) Kolben (32) längsverschiebbar, dicht anliegend unter Volumenänderung des Arbeitsraumes (29) geführt sind, die mit der Pleuelachse (35) verbunden sind,
**dadurch gekennzeichnet,** daß
die Zuführung des Druckmediums durch das Innere des Kolbens (32), der Pleuelstange (30) und/oder des Gleitsteines (51) und der exzenterischen Pleuelachse (35) der Hydraulikmaschine (1) erfolgt.

2. Hydraulikmaschine nach einem der vorhergehenden Ansprüche,
**dadurch gekennzeichnet**, daß
die Zuführung des Druckmediums über Steuernieren (105, 106) erfolgt, die über jeweils höchstens 180° des äußeren Umfanges des Exzenters (35) angeordnet sind, und mit den radial äußeren Enden der Arbeitsräume (29) in Verbindung treten können.

3. Hydraulikmaschine nach einem der vorhergehenden Ansprüche,
**dadurch gekennzeichnet**, daß
die Exzentrizität der Pleuelachse (35) zum Zylindergrundkörper (31) verstellbar ist, indem relativ zur Pleuelachse (35) in einem Hohlraum (108) der Pleuelachse (35) quer zu deren Symetrieachse ein Steuerkolben (107) dicht anliegend relativ verschiebbar ist und die Arbeitsräume (114, 114') beidseits des Steuerkolbens (107) mit Steuermedium beaufschlagbar sind.

4. Hydraulikmaschine nach einem der vorhergehenden Ansprüche,
**dadurch gekennzeichnet**, daß
in einem Basisgehäuse (200) ein Steuerkolben (207) dicht anliegend verschiebbar ist und die Arbeitsräume (208, 208') beidseits des Steuerkolbens (207) mit Steuermedium beauf-schlagbar sind und der Steuerkolben (207) über einen Hebel (206) mit der Pleuelachse (35) wirkverbunden ist, sodaß ein Verschieben des Steuerkolbens (207) eine Verstellung der Exzentrizität der Pleuelachse (35) ergibt.

5. Hydraulikmaschine nach Anspruch 14,
**dadurch gekennzeichnet,** daß
der Hebel (206) ein zweiarmiger Winkelhebel ist und der Steuer-kolben (207) parallel zur Symmetrieachse der Pleuelachse (35) verschiebbar ist.

6. Hydraulikmaschine nach einem der vorhergehenden Ansprüche,
**dadurch gekennzeichnet,** daß
die Pleuelachse (35) in der Mitte einen entlang ihrer Symmetrieachse verlaufenden, durchgehenden Hohlraum (202) auf-weist und der Steuerkolben (207) außerhalb der Querschnitts-fläche des Hohlraumes (202) angeordnet ist und auf zwei Hebel (206) wirkt, die einschließlich ihrer Nutensteine (201) beidseits außerhalb des Hohlraumes (202) angeordnet sind.

7. Hydraulikmaschine nach einem der vorhergehenden Ansprüche,
wobei die Kolben (32) und Kolben- bzw. Pleuelstange (30) einstückig ausgebildet sind,
**dadurch gekennzeichnet**, daß
- die Kolben (32) in Laufbuchsen laufen, welche in dem Zylindergrundkörper (31) schwenkbar um eine Schwenkachse parallel zur Drehachse der Hydraulikmaschine (1) gelagert sind, und
- die Laufbuchsen eine in Blickrichtung der Drehachse der Hydraulikmaschine (1) teilkreis-förmige Außenkontur besitzen und in einer analogen Innenkontur des Zylindergrundkörpers (31) schwenkbar gelagert sind.

8. Hydraulikmaschine mit den Merkmalen des Oberbegriffes des Anspruches 1, wobei die Kolben (32) und Kolben- bzw. Pleuelstange (30) einstückig ausgebildet sind
**dadurch gekennzeichnet,** daß
die Zylinderräume (36) bezüglich des Zentrums des Zylindergrundkörpers (31) etwa tangential, insbesondere um einen Winkel von 15° bis 60° gegenüber der rein radialen Richtung, im Zylindergrundkörper (31) angeordnet sind.

9. Hydraulikmaschine mit den Merkmalen des Oberbegriffes des Anspruches 1, wobei die Kolben (32) und Kolben- bzw. Pleuelstange (30) einstückig ausgebildet sind,
**dadurch gekennzeichnet,** daß
die Pleuelachse (35) aus zwei ineinanderlaufenden Exzenterbuchsen (56, 57) besteht, sodaß auf der Außenseite der äußeren Buchse (56) die Pleuelaugen (33) bzw. die Gleitsteine (51) laufen und sich die Innenfläche der inneren Buchse (57) auf einer konzentrischen Mantelfläche abstützt und
- die gegenseitig gleiche Winkellage der beiden Exzenterbuchsen (56, 57) durch ein Stellelement einstellbar ist.

10. Hydraulikmaschine nach einem der vorhergehenden Ansprüche,
**dadurch gekennzeichnet**, daß
- in einer nach außen hin offenen, hinterschnittenen Ringnut (52) der Pleuelachse (35) oder des Pleuelauges (33) Gleitsteine (51) geführt sind, die mit den Rückseiten der Kolben (32) verbunden sind,
- die in radialer Richtung in der Abwicklung betrachtete Grundfläche der Gleitsteine (51) parallelogrammförmig oder pfeilförmig ist oder die Form zweier, in axialer Richtung aneinander angrenzender und in Umfangsrichtung nur teilweise überlappender, Rechtecke haben, sodaß trotz vergrößerter Gesamtlänge des Gleitsteines (51) in der Abwicklung die gleiche Anzahl von Gleitsteinen hintereinander über den Umfang des Pleuelauges angeordnet werden können.

11. Hydraulikmaschine nach einem der vorhergehenden Ansprüche,
**dadurch gekennzeichnet**, daß
in den Laufflächen der an den inneren Enden der Kolbenstangen (30) angeordneten Bauteile flache, möglichst großflächige Drucktaschen (300) zur hydrostatischen Abstützung gegenüber dem Exzenter angeordnet sind, die mit dem druckseitigen Hydraulikmedium in Verbindung stehen.

12. Hydraulikmaschine nach einem der vorhergehenden Ansprüche,
**dadurch gekennzeichnet**, daß
die Gleitflächen zwischen Kolben (32) und Laufbuchse beziehungsweise Laufbuchse und Zylindergrundkörper (31) bzw. äußerem Pleuelstangenende und Kolbenrückseite zur Schmierung über Durchläße mit relativ geringem Querschnitt mit druckseitigem Hydraulikmedium versorgt werden.

13. Hydraulikmaschine nach einem der vorhergehenden Ansprüche,
**dadurch gekennzeichnet**, daß
- die Zylinderräume (36) in wenigstens zwei axial beabstandeten Radialebenen (50) so angeordnet sind, daß sich eine geringstmögliche axiale Länge des Zylindergrundkörpers (31) ergibt und
- die Punkte höchster Kompression der einzelnen Radialebenen (50) in ihrer Drehlage zueinander so um gleiche Winkelbeträge versetzt sind, daß sich die im Betrieb auftretenden radialen Kräfte weitgehend gegenseitig aufheben.

14. Hydraulikmaschine nach einem der vorhergehenden Ansprüche,
**dadurch gekennzeichnet**, daß
- zur Verbindung mit einer Schubstange (34) an der Pleuelachse (35) stirnseitig eine Steuerplatte (54) befestigt ist, die eine größere radiale Erstreckung besitzt als die Pleuelachse (35) und radial geführt ist.

## Claims

1. A hydraulic machine comprising cylinder chambers (36) which are arranged in a star shape in a main cylinder body (31) and
- which combine in the centre of the main cylinder body (31) to provide a central chamber (37)
- through which a connecting rod shaft (35) which rotates relative to the main cylinder body (31) extends in eccentric relationship with the main cylinder body (31), and
- pistons (32) are guided longitudinally displaceably and in sealing contact in the cylinder chambers (36), with a variation in volume of the working chamber (29), which pistons are connected to the connecting rod shaft (35),
characterised in that the feed of the pressure medium is through the interior of the piston (32), the connecting rod (30) and/or the slide member (51) and the eccentric connecting rod shaft (35) of the hydraulic machine (1).

2. A hydraulic machine according to claim 1 characterised in that the feed of the pressure medium is by way of control pockets (105, 106) which are each arranged over at most 180° of the outside periphery of the eccentric (35) and which can come into communication with the radially outward ends of the working chambers (29).

3. A hydraulic machine according to one of the preceding claims characterised in that the eccentricity of the connecting rod shaft (35) relative to the main cylinder body (31) is adjustable insofar as a control piston (107) is relatively displaceable in sealing contact relative to the connecting rod shaft (35) in a cavity (108) in the connecting rod shaft (35) transversely with respect to the axis of symmetry thereof and the working chambers (114, 114') on both sides of the control piston (107) can be acted upon by control medium.

4. A hydraulic machine according to one of the preceding claims characterised in that a control piston (207) is displaceable in sealing contact in a base housing (200) and the working chambers (208, 208') on both sides of the control piston (207) can be acted upon with control medium and the control piston (207) is operatively connected by way of a lever (206) to the connecting rod shaft (35) so that displacement of the control piston (207) produces adjustment of the eccentricity of the connecting rod shaft (35).

5. A hydraulic machine according to claim 4 characterised in that the lever (206) is a two-armed angle lever and the control piston (207) is displaceable parallel to the axis of symmetry of the connecting rod shaft (35).

6. A hydraulic machine according to one of the preceding claims characterised in that in the centre the connecting rod shaft (35) has a continuous cavity (202) which extends along its axis of symmetry and the control piston (207) is arranged outside the cross-sectional area of the cavity (202) and acts on two levers (206) which including their groove sliders (201) are arranged on both sides outside the cavity (202).

7. A hydraulic machine according to one of the preceding claims wherein the pistons (32) and piston or connecting rod (30) are of an integral construction characterised in that
- the pistons (32) run in liners which are mounted in the main cylinder body (31) pivotably about a pivot axis parallel to the axis of rotation of the hydraulic machine (1), and
- the liners are of an outside contour which is part-circular in the direction of viewing the axis of rotation of the hydraulic machine (1) and are mounted pivotably in a similar inside contour of the main cylinder body (31).

8. A hydraulic machine having the features of the classifying portion of claim 1 wherein the pistons (32) and piston or connecting rod (30) are of an integral construction characterised in that the cylinder chambers (36) are arranged in the main cylinder body (31) approximately tangentially relative to the centre of the main cylinder body (31), in particular through an angle of 15° to 60° with respect to the purely radial direction.

9. A hydraulic machine having the features of the classifying portion of claim 1 wherein the pistons (32) and piston or connecting rod (30) are of an integral construction characterised in that
- the connecting rod shaft (35) comprises two eccentric bushes (56, 57) which run one within the other, so that the connecting rod eyes (33) or the slide members (51) run on the outside of the outer bush (56) and the inside surface of the inner bush (57) is supported on a concentric peripheral surface, and
- the mutually equal angular position of the two eccentric bushes (56, 57) can be set by a setting element.

10. A hydraulic machine according to one of the preceding claims characterised in that
- slide members (51) which are connected to the rear sides of the pistons (32) are guided in an outwardly open undercut annular groove (52) of the connecting rod shaft (35) or the connecting rod eye (33), and
- the base surface of the slide members (51), which is viewed in the radial direction in the development, is of a parallelogram shape or an arrow shape or is of the shape of two rectangles which adjoin each other in the axial direction and which only partially overlap in the peripheral direction so that the sane number of slide members can be arranged in succession over the periphery of the connecting rod eye in spite of an enlarged overall length of the slide member (51) in the development.

11. A hydraulic machine according to one of the preceding claim characterised in that arranged in the running surfaces of the components arranged at the inner ends of the piston rods (30) are shallow pressure pockets (300) which are of maximum possible area for hydrostatic support relative to the eccentric, which communicate with the hydraulic medium on the pressure side.

12. A hydraulic machine according to one of the preceding claims characterised in that the sliding surfaces between the piston (32) and the liner or the liner and the main cylinder body (31) or the outer connecting rod end and the rear side of the piston are supplied with hydraulic medium on the pressure side for lubrication purposes by way of passages of relatively small cross-section.

13. A hydraulic machine according to one of the preceding claims characterised in that
- the cylinder chambers (36) are arranged in at least two axially spaced radial planes (50) so that the axial length of the main cylinder body (31) is as small as possible, and
- the points of highest compression of the individual radial planes (50) are displaced in their rotational position relative to each other through equal angular amounts so that the radial forces which occur in operation substantially cancel each other out.

14. A hydraulic machine according to one of the preceding claims characterised in that
- for connection to a thrust rod (34) a control plate (54) is fixed to the connecting rod shaft (35) at the end, which control plate is of a greater radial extent than the connecting rod shaft (35) and is radially guided.

## Revendications

1. Machine hydraulique avec des chambres de cylindres (36) disposées en étoile dans un bloc-cylindres (31),
- qui se réunissent au centre du bloc-cylindres (31) en une chambre centrale (37),
- à travers laquelle s'étend, en position excentrique par rapport au bloc-cylindres (31), un axe de bielle (35) tournant par rapport a celui-ci, et
- des pistons (32), qui sont reliés à l'axe de bielle (35), sont guidés en mouvement coulissant longitudinal en étant appliqués de façon étanche, dans les chambres de cylindres (36), avec variation du volume de la chambre de travail (29),
caractérisée en ce que
- l'alimentation en fluide comprimé est effectuée par l'intérieur du piston (32), de la bielle (30) et/ou du coulisseau (51) et de l'axe de bielle excentrique (35) de la machine hydraulique (1).

2. Machine hydraulique suivant la revendication 1, caractérisée en ce que l'alimentation en fluide comprimé est effectuée par des segments de commande (105, 106), qui sont disposés chacun au maximum sur 180° du pourtour extérieur de l'excentrique (35), et qui peuvent entrer en communication avec les extrémités radialement extérieures des chambres de travail (29).

3. Machine hydraulique suivant l'une quelconque des revendications précédentes, caractérisée en ce que l'excentricité de l'axe de bielle (35) par rapport au bloc-cylindres (31) est réglable, du fait qu'un piston de commande (107), appliqué de façon étanche, peut coulisser par rapport à l'axe de bielle (35) dans une cavité (108) de l'axe de bielle (35) transversalement à l'axe de symétrie de celui-ci et que les chambres de travail (114, 114') de part et d'autre du piston de commande (107) peuvent être alimentées en fluide de commande.

4. Machine hydraulique suivant l'une quelconque des revendications précédentes, caractérisée en ce qu'un piston de commande (207), appliqué de façon étanche peut coulisser dans une enceinte de base (200) et les chambres de travail (208, 208') de part et d'autre du piston de commande (207) peuvent être alimentées en fluide de travail et le piston de commande (207) est en liaison active avec l'axe de bielle (35) par l'intermédiaire d'un levier (206), de telle façon qu'un déplacement du piston de commande (207) produise un réglage de l'excentricité de l'axe de bielle (35).

5. Machine hydraulique suivant la revendication 4, caractérisée en ce que le levier (206) est un levier coudé à deux bras et le piston de commande (207) peut coulisser parallèlement à l'axe de symétrie de l'axe de bielle (35).

6. Machine hydraulique suivant l'une quelconque des revendications précédentes, caractérisée en ce que l'axe de bielle (35) présente en son milieu une cavité (202) traversante, orientée le long de son axe de symétrie, et le piston de commande (207) est disposé à l'extérieur de l'aire de la section transversale de la cavité (202) et agit sur deux leviers (206), qui sont disposés, y compris leurs coulisseaux (201), de part et d'autre à l'extérieur de la cavité (202).

7. Machine hydraulique suivant l'une quelconque des revendications précédentes, dans laquelle les pistons (32) et les bielles respectivement les bielles motrices (30) sont formées d'une seule pièce, caractérisée en ce que
- les pistons (32) se déplacent dans les boîtes de glissement, qui sont supportées dans le bloc-cylindres (31) de façon basculante autour d'un axe de basculement, parallèlement à l'axe de rotation de la machine hydraulique (1), et
- les boîtes de glissement possèdent un contour extérieur partiellement circulaire, vu dans la direction de l'axe de rotation de la machine hydraulique (1), et sont supportées de façon basculante dans un contour intérieur analogue du bloc-cylindres (31).

8. Machine hydraulique suivant la revendication 1, dans laquelle les pistons (32) et les bielles respectivement les bielles motrices (30) sont formés d'une seule pièce, caractérisée en ce que
- les chambres de cylindres (36) sont disposées dans le bloc-cylindres (31), de façon sensiblement tangentielle par rapport au centre du bloc-cylindres (31), en particulier avec un angle de 15° à 60° par rapport à la direction purement radiale.

9. Machine hydraulique suivant la revendication 1, dans laquelle les pistons (32) et les bielles respectivement les bielles motrices (30) sont formés d'une seule pièce, caractérisée en ce que
- l'axe de bielle (35) se compose de deux buselures excentriques (56, 57) tournant l'une dans l'autre de telle façon que les bagues de tête de bielle (33), respectivement les coulisseaux (51), glissent sur la face extérieure de la buselure externe (56) et que la face intérieure de la buselure interne (57) prenne appui sur une surface laterale concentrique, et
- la position angulaire mutuellement identique des deux buselures excentriques (56, 57) est réglable par un élément de réglage.

10. Machine hydraulique suivant l'une quelconque des revendications précédentes, caractérisée en ce que
- dans une rainure annulaire (52) en dépouille, ouverte vers l'extérieur, de l'axe de bielle (35) ou de la bague de tête de bielle (33), sont guidées des coulisseaux (51), qui sont reliés aux faces arrière des pistons (32),
- la face intérieure des coulisseaux (51), considérée en direction radiale dans le développement, a la forme d'un parallélogramme ou d'une flèche ou a la forme de deux rectangles jointifs l'un à l'autre en direction axiale en ne se recouvrant que partiellement en direction radiale, de telle façon que, malgré une longueur totale accrue du coulisseau (51) dans le développement, on puisse disposer le même nombre de coulisseaux l'un derrière l'autre sur le pourtour de la blague de tête de bielle.

11. Machine hydraulique suivant l'une quelconque des revendications précédentes, caractérisée en ce que, dans les faces de glissement des composants disposés aux extrémités intérieures des bielles (30) sont disposées des poches de pression (300) plates, d'aussi grande étendue que possible, pour assurer un support hydrostatique par rapport à l'excentrique, qui sont en communication avec le fluide hydraulique du côté de la pression.

12. Machine hydraulique suivant l'une quelconque des revendications précédentes, caractérisée en ce que les faces de glissement entre piston (32) et boîte de glissement respectivement entre boîte de glissement et bloc-cylindres (31) respectivement entre extrémité extérieure de bielle et face arrière de piston sont, pour la lubrification, alimentées en fluide hydraulique sous pression par des passages de section relativement petite.

13. Machine hydraulique suivant l'une quelconque des revendications précédentes, caractérisée en ce que
- les chambres de cylindres (36) sont disposées dans au moins deux plans radiaux (50) distants axialement, de telle façon qu'il en résulte une longueur axiale aussi petite que possible du bloc-cylindre (31) et
- les points de plus grande compression des divers plans radiaux (50) sont décalés l'un par rapport à l'autre, en position angulaire, de quantités angulaires égales, de telle façon que les efforts radiaux apparaissent en fonctionnement se compensent largement l'un l'autre.

14. Machine hydraulique suivant l'une quelconque des revendications précédentes, caractérisée en ce que
- une plaque de commande (54), qui possède une extension radiale plus grande que l'axe de bielle (35) et est guidée radialement, est fixée en position frontale, pour assurer la liaison avec une bielle (34) à l'axe de bielle (35).
